# EUROPÄISCHE PATENTSCHRIFT

(11) **EP 3 266 309 B1**
(45) Veröffentlichungstag und Bekanntmachung des Hinweises auf die Patenterteilung: **17.10.2018**
(21) Anmeldenummer: 16178612.4
(22) Anmeldetag: 08.07.2016
(51) Int. Cl.: A22C 17/00, A22C 7/00

(54) **BEHÄLTER FÜR DIE ZUBEREITUNG UND/ODER DEN TRANSPORT EINER FLEISCHEINHEIT FÜR EINEN DREHSPIESS**
CONTAINER FOR USE IN THE PROVISION AND/OR TRANSPORT OF A MEAT UNIT FOR A ROTATING SPIT
RÉCIPIENT POUR LA PRÉPARATION ET/OU LE TRANSPORT D'UN MORCEAU DE VIANDE POUR UN TOURNEBROCHE

(43) Veröffentlichungstag der Anmeldung: 10.01.2018
(73) Patentinhaber: Akdemir, Firat, 36199 Rotenburg an der Fulda (DE)
(72) Erfinder: AKDEMIR, Firat, 36199 Rotenburg an der Fulda (DE); AKDEMIR, Ilyas, 36179 Bebra (DE)
(74) Vertreter: Patentanwälte Walther Hinz Bayer PartGmbB

(56) Entgegenhaltungen:
- EP-A1- 2 957 518
- DE-U1-202010 005 032
- US-A- 3 153 811

## Beschreibung

Die vorliegende Erfindung betrifft einen Behälter für die Zubereitung und/oder den Transport einer Fleischeinheit für einen Drehspieß mit einem Boden und einem den Behälter verschließbaren Deckel, wobei der Deckel einen Deckelrand und einen Deckelboden aufweist, dass der Deckelboden mindestens einen kreisförmigen Abschnitt aufweist, der im auf der Öffnung des Behälters aufsitzenden Zustand in axialer Richtung des Behälters beweglich ist.

Aus der US 3,153,811 A ist ein Behälter zur Formung von Nahrungsmitteln bekannt, wobei der Behälter einen Schwenkdeckel aufweist, der zum Verschließen des Behälters auf den Behälter zu verschwenkbar ist.

Eine Fleischeinheit eines Drehspießes besteht aus mehreren Lagen einer bestimmten Fleischsorte, insbesondere Kalbfleisch oder Putenfleisch. Eine solche Fleischeinheit als Drehspieß dreht sich vor einer Heizeinrichtung, wobei in bestimmten zeitlichen Abständen mithilfe eines speziellen Messers nach und nach die äußeren gebräunten Schichten dünn abgeschnitten werden. Die abgeschnittenen Fleischstücke werden als Döner, oder auch als Gyros in Abhängigkeit der verwendeten Fleischsorte bezeichnet, und werden bei einem Döner z. B. in einem aufgeschnittenen Fladenbrot serviert.

Üblicherweise wird für die Herstellung einer solchen Fleischeinheit derart vorgegangen, dass ein Unterteller vorgesehen ist, wobei auf dem Unterteller einer weiterer Teller aus Kunststoff lagert, wobei auf dem unteren Teller ein Rohr angeordnet ist, dass von einem Spieß durchdrungen wird. Alsdann werden die einzelnen Fleischschichten über den Spieß und das Rohr geschoben, wobei darauf geachtet wird, dass schlussendlich die Form der Fleischeinheit leicht konisch ist. Nachdem die Fleischeinheit ihre endgültige Größe erreicht hat, wird der Spieß herausgezogen, wobei das Rohr in der Fleischeinheit verbleibt. Alsdann wird die Fleischeinheit durch eine Kunststofffolie allseitig ummantelt, sodass das Fleisch im Wesentlichen luftdicht verpackt ist. Im Anschluss daran wird die Fleischeinheit schockgefroren. Im gefrorenen Zustand kommt dann die Fleischeinheit in den Handel, das heißt, die Fleischeinheit wird mittels geeigneter Kühlfahrzeuge zu den Abnehmern transportiert. Auch bei den einzelnen Abnehmern erfolgt die Lagerung tiefgekühlt, wobei dann, wenn absehbar ist, dass ein neuer Spieß benötigt wird, zunächst im gefrorenen Zustand versucht wird, die Folie von dem Fleisch abzuziehen.

Insbesondere die Folie, die in unmittelbarem Kontakt zu dem Fleisch steht, lässt sich allerdings aufgrund des gefrorenen Zustands des Fleisches nicht ohne Weiteres vom Fleisch abziehen. Üblich ist daher, das Fleisch antauen zu lassen und dann im angetauten Zustand zu versuchen, die Folie abzuziehen. Häufig ist es jedoch so, dass die Zeit, die benötigt wird, das Fleisch antauen zu lassen, nicht zur Verfügung steht. Teilweise wird dann so vorgegangen, dass das Fleisch durch den Grill angetaut wird, wobei hierbei immer natürlich die Gefahr besteht, dass die Kunststofffolie mit verbrennt und zumindest in die äußeren Schichten des Fleisches eindringt. Zusammengefasst bedeutet dies, dass die Handhabung einer Fleischeinheit eines Kebab- oder Dönerspießes, insbesondere dann, wenn die Fleischeinheit vom gefrorenen Zustand des Fleisches in den Betriebszustand überführt werden soll, sehr aufwendig ist.

Aus dem Stand der Technik sind insofern auch bereits Vorschläge bekannt, wie die Zubereitung und der Transport von derartigen Fleischspießen vereinfacht werden können. So ist aus der DE 60 2004 007 015 T2 ein konischer Behälter zur Aufnahme von Fleischstücken unterschiedlicher Form und Größe zur Herstellung und zum Transport einer Kebabeinheit bekannt. Die Kebabeinheit weist ein die Kebabeinheit in Längsrichtung der Kebabeinheit durchragendes Rohr auf, auf das ein Spieß steckbar ist. Der Behälter mit der Kebabeinheit wird in einer Schachtel transportiert.

Nachteilig an diesem Behälter ist, dass aufgrund der Höhe des Behälters von etwa 65 cm die Befüllung des Behälters mit einzelnen Fleischstücken relativ schwierig und aufwendig ist. Es besteht auch immer die Gefahr der Verletzung, da die einzelnen Fleischstücke über den das Rohr überstehenden Fleischspieß gesteckt werden müssen. Nicht erkennbar ist, wie die Fleischeinheit vor dem Schockgefrieren luftdicht verpackt werden kann. Das heißt, der aus der DE 60 2004 007 015 T2 bekannte konische Behälter dient lediglich der unmittelbaren Herstellung einer Kebabeinheit, die zum unmittelbaren Verbrauch gedacht ist.

Aus der DE 143 386 A1 ist ein Gyros- oder Döneraufbaugerät bekannt. Dieses Aufbaugerät umfasst mehrere übereinander angeordnete halbkreisförmige Etagenringe, die jeweils eine Schwenkhülse aufweisen, wobei die Schwenkhülsen der Etagenringe durch eine Schwenkstange miteinander in Verbindung stehen. Eine ähnliche konische Konstruktion ergibt sich aus der EP 1 462 006 A1. Ein solches Döneraufbaugerät dient lediglich dazu, eine Fleischeinheit bestimmter Form und Größe herzustellen. Denn nach Herstellen der Fleischeinheit, das heißt, nach Abnahme der einzelnen Etagenringe des Aufbaugerätes ist es immer noch erforderlich, dass die Fleischeinheit mit Folie umwickelt wird, bevor die Fleischeinheit schockgefroren wird.

Aus der EP 2 957 518 A1 ist ein Behälter für die Zubereitung und den Transport einer Fleischeinheit für einen Drehspieß bekannt, wobei der Behälter mindestens zwei konisch zulaufende übereinander angeordnete miteinander in Verbindung stehende Behältersegmente verfügt, wobei das erste untere Behältersegment einen Boden aufweist. Das obere Behältersegment wird durch einen Deckel verschlossen. Der Deckel verfügt über eine Bohrung, wobei die Bohrung der Aufnahme einer Rohrhülse dient, die mittels eines Spießes durch die Fleischeinheit getrieben wird.

Als nachteilig an diesem Stand der Technik wird Folgendes empfunden: Beim Einbringen des Fleisches wird das Fleisch in den Behälter eingedrückt. Dies mit dem Ziel, möglichst wenig Hohlräume entstehen zu lassen. Das Fleisch hat allerdings ein gewisses Rücksprungverhalten, was bedeutet, dass bei auf dem Behälter aufsitzenden Deckel, sich das Fleisch unter Umständen wiederum bis an die Deckelunterseite ausdehnt. Das heißt, es entstehen im Zweifelsfall Lufteinschlüsse in der Fleischeinheit.

Dies ist insofern von Nachteil, da bei dem nachfolgenden Gefriervorgang des Behälters, einschließlich der darin gelagerten Fleischeinheit, in den mit Luft gefüllten Hohlräumen zwischen den einzelnen Fleischstücken Gefrierbrand entsteht. Ein solcher Gefrierbrand ist nach Möglichkeit zu vermeiden, was bedeutet, dass die Entstehung von Hohlräumen während des Gefriervorganges zu vermeiden ist.

Aus der DE 20 2010 005 032 U1 ist ein Behälter gemäß dem Oberbegriff des Anspruches 1 bekannt, bei dem der Deckelboden einen kreisförmigen Abschnitt aufweist, der in auf der Öffnung des Behälters aufsitzendem Zustand in axialer Richtung des Behälters beweglich ist, um ein Vakuum zu erzeugen. Durch das Vakuum sollen in dem Behälter gelagerte Lebensmittel länger haltbar werden.

Die der Erfindung zugrunde liegende Aufgabe besteht darin, die Entstehung von Hohlräumen nach der Einbringung des Fleisches zur Bildung einer Fleischeinheit in den Behälter zu vermeiden. Zusätzlich soll die Fleischeinheit durch eine Grilleinrichtung aufgenommen werden können.

Zur Lösung der Aufgabe wird erfindungsgemäß vorgeschlagen, dass der mindestens eine kreisförmige Abschnitt im auf dem Behälter aufsitzenden Zustand aus einer ersten, auf den Innenraum des Behälters zugerichteten Lage in mindestens eine zweite Lage überführbar ist, in der der Abstand zum Boden des Behälters größer ist als bei der ersten Lage, wobei der Deckelboden ein sich an den Deckelrand anschließendes Ringsegment aufweist, das den kreisförmigen Abschnitt aufnimmt, wobei das Ringsegment, das den kreisförmigen Abschnitt aufweist, im Übergangsbereich zu dem kreisförmigen Abschnitt in axialer Richtung des Behälters beweglich ist, wobei der Deckelboden eine zentrische Öffnung zur Aufnahme einer Rohrhülse aufweist.

Der Deckel übt im aufsitzenden Zustand auf der Öffnung des Behälters zunächst auf die Fleischeinheit Druck aus. Wird sodann der Behälter einschließlich der Fleischeinheit schockgefroren, so kommt es aufgrund des Gefriervorganges zu einer Volumenvergrößerung der Fleischeinheit. Das heißt, dass die Fleischeinheit sich ausdehnt. Bei diesem Vorgang ist der Deckel in der Lage, der Ausdehnung des Fleisches zu folgen, indem er nämlich in eine zweite, insbesondere von der Fleischeinheit wegweisende Lage überführbar ist. Hierbei steht allerdings der Deckel immer in Kontakt mit der Fleischeinheit, sodass auch zwischen Deckel und Fleischeinheit selbst im Wesentlichen kein Hohlraum entstehen kann, der gegebenenfalls Gefrierbrand verursachen könnte. Zusammengefasst bedeutet dies, dass mit dem erfindungsgemäßen Deckel zum einen das Luftvolumen zwischen Deckel und Fleischeinheit vermindert wird, und zum anderen durch die Lageveränderung der Auswölbung aus einer auf die Fleischeinheit zugerichteten ersten Stellung in eine von der Fleischeinheit weggerichteten zweiten Stellung die Fleischeinheit immer unter Druck steht, sodass, wie bereits ausgeführt, Lufteinschlüsse in der Fleischeinheit in dem Behälter minimiert werden. Durch den Druck auf die Fleischeinheit wird außerdem bewirkt, dass die einzelnen Fleischlappen in dem Behälter besser miteinander verkleben, sodass beim Abschneiden der gegrillten Fleischstücke nicht die Gefahr besteht, dass einzelne Fleischlappen aus dem Drehspieß herausgelöst werden.

Hierbei ist der mindestens eine kreisförmige Abschnitt im auf dem Behälter aufsitzenden Zustand aus einer ersten, auf den Innenraum des im Querschnitt runden Behälters zugerichteten Lage, in mindestens eine zweite Lage überführbar, in der der Abstand zum Boden des Behälters größer ist als bei der ersten Lage.

Weiterhin ist vorgesehen, dass der Deckelboden ein sich an den Deckelrand anschließendes Ringsegment aufweist, das den kreisförmigen Abschnitt aufnimmt. Hieraus wird deutlich, dass der Deckelboden aus zwei konzentrischen Abschnitten ausgebildet ist, nämlich einem äußeren Ringsegment, das innenliegend den kreisförmigen Abschnitt aufnimmt. Das Ringsegment selbst ist hierbei unmittelbar mit dem Deckelrand verbunden. Das Ringsegment, das den kreisförmigen Abschnitt aufnimmt, ist hierbei im Übergangsbereich zu dem kreisförmigen Abschnitt in axialer Richtung des Behälters beweglich, insbesondere elastisch verformbar. Durch die Beweglichkeit oder Verformbarkeit des Ringsegmentes, das, wie bereits ausgeführt, konzentrisch den kreisförmigen Abschnitt aufnimmt, wird erreicht, dass der kreisförmige Abschnitt des Deckelbodens von einer ersten auf die Fleischeinheit zugerichteten Lage in eine zweite, andere Lage überführbar ist, in der der Abstand des Deckelbodens zum Boden des Behälters größer ist als im Zustand der ersten Lage. Dies immer vor dem Hintergrund, dass durch den Deckelboden des Deckels die Fleischeinheit immer unter einem gewissen axialen Druck steht, um Lufteinschlüsse zu minimieren.

Die Rohrhülse wird, nach Befüllung des Behälters mit einer Fleischeinheit, mit Hilfe eines Spießes durch die Fleischeinheit getrieben, bis die Rohrhülse den Boden des Behälters erreicht. Auf dem Boden des Behälters befindet sich üblicherweise ein Bund, der die Lage der Rohrhülse auf dem Boden in seitlicher Richtung fixiert. Die Länge der Rohrhülse ist hierbei derart gewählt, dass bei jeder Ausrichtung der Auswölbung des Deckelbodens in axialer Richtung die Rohrhülse über den Deckel übersteht. Hierdurch wird verhindert, dass Luft zwischen der Außenmantelfläche der Rohrhülse und der Öffnung im Deckel in das Innere des Behälters einströmen kann, wobei des Weiteren vorteilhaft vorgesehen ist, dass die Rohrhülse gegenüber der Öffnung radial abgedichtet ist. Dies kann beispielsweise dadurch geschehen, dass die Öffnung einen umlaufenden Bund aufweist, wodurch die Fläche, mit der der Deckelboden an der Rohrhülse anliegt, wesentlich erhöht wird, mithin die Dichtwirkung vergrößert werden kann.

Vorteilhafte Merkmale und Ausgestaltungen der Erfindung ergeben sich aus den Unteransprüchen.

Die Verformbarkeit des Deckels wird insbesondere durch die Wahl eines geeigneten Kunststoffs, z. B. Polypropylen (PP), gewährleistet. Der Behälter ist hierbei vorteilhaft ebenfalls aus einem geeigneten Kunststoff ausgebildet.
Im Einzelnen ist in Bezug auf die Ausbildung des Ringsegmentes vorgesehen, dass das Ringsegment in Richtung der Mittellängsachse des Behälters auf die Oberseite des Deckels zu schräg verlaufend ausgerichtet ist. Durch die hierdurch erzielte hohe Steifigkeit des Ringsegments wird erreicht, dass insbesondere der kreisförmige Abschnitt mit verhältnismäßig hoher Kraft auf die im Behälter befindliche Fleischeinheit einwirken kann.

Vorteilhaft ist weiterhin, wenn der kreisförmige Abschnitt im auf dem Behälter aufsitzenden Zustand eine in Richtung des Bodens des Behälters ausgerichtete, insbesondere schalenförmige Wölbung aufweist. Eine solche Wölbung bewirkt, dass die im Behälter befindliche Fleischeinheit im noch nicht gefroren Zustand leicht nach außen gepresst wird, um hierdurch Hohlräume in der Fleischeinheit zu vermindern.

Es wurde bereits darauf hingewiesen, dass durch das Ringsegment, das im Querschnitt eine in Richtung auf die Oberseite des Deckels ausgerichtete Schräge aufweist, in Verbindung mit dem die Wölbung aufweisenden kreisförmigen Abschnitt, eine verhältnismäßig hohe Kraft auf die Fleischeinheit ausgeübt werden kann. Die Krafteinwirkung kann noch dadurch erhöht werden, dass das Ringsegment umfangsverteilt sich über die Breite des Ringsegmentes erstreckende Nasen aufweist. Die Nasen dienen der Versteifung des Ringsegmentes.

Nach einem weiteren vorteilhaften Merkmal der Erfindung weist der Deckelrand einen Einzug auf, wobei sich an den Einzug das Ringsegment anschließt. Die Nasen des Ringsegmentes erstrecken sich hierbei vorteilhaft über die Höhe des Einzugs. Durch die Ausbildung des Deckels mit einem solchen Einzug, das heißt, mit einem von der Oberseite des Deckels abgesetzten Deckelboden, wird zusätzlich erreicht, dass selbst bei auf die Oberseite des Deckels zugerichtete Auswölbung des Deckelbodens, zum Beispiel nach dem Gefriervorgang, einzelne Behälter stapelbar bleiben.

Nach einem weiteren Merkmal der Erfindung ist vorgesehen, dass der Deckel, der ebenso wie der Behälter aus einem Kunststoff, insbesondere einem Polypropylen, hergestellt ist, durch einen Schnappverschluss lösbar mit dem Behälter verbunden ist.

Gegenstand der Erfindung ist auch die Verwendung eines Behälters für die Zubereitung und/oder den Transport einer Fleischeinheit für einen Drehspieß gemäß dem Anspruch 8. Der Behälter ist hierbei insbesondere nach einem oder mehrerer der Ansprüche 1 bis 7 ausgebildet.

Anhand der Zeichnungen wird die Erfindung beispielhaft nachstehend näher erläutert.
- Fig. 1: zeigt den Behälter einschließlich des Deckels in einer perspektivischen Darstellung;
- Fig. 2: zeigt den Deckel im Schnitt im auf dem Behälter aufsitzenden Zustand;
- Fig. 2a: zeigt die Einzelheit Ila aus Fig. 2 in vergrößerter Darstellung;
- Fig. 3: zeigt den Deckel in einer Ansicht auf dessen Oberseite.

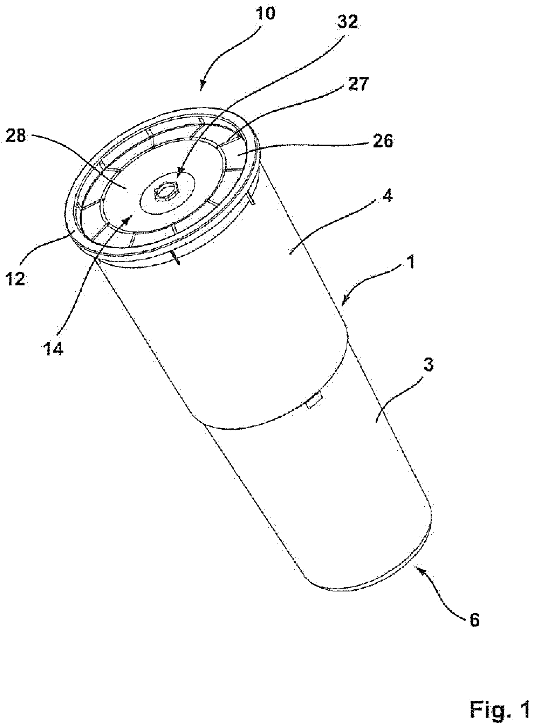

Gemäß Fig. 1 ist der Behälter insgesamt mit 1 bezeichnet, wobei der Behälter den Deckel 10 aufweist. Der Behälter 1 besteht aus zwei im Querschnitt runden Behältersegmenten 3, 4, die leicht konisch ausgebildet sind, und ausziehbar miteinander in Verbindung stehen. Das Behältersegment 3 weist hierbei einen Boden 6 auf.

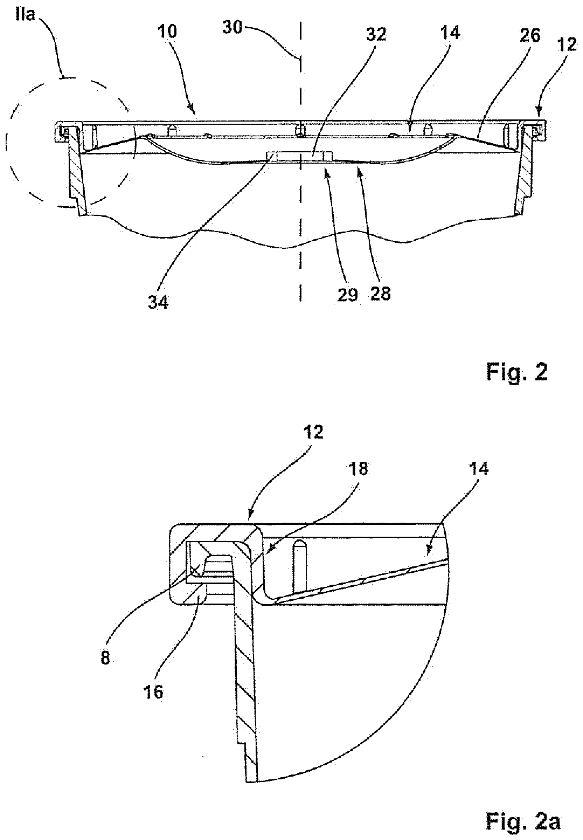

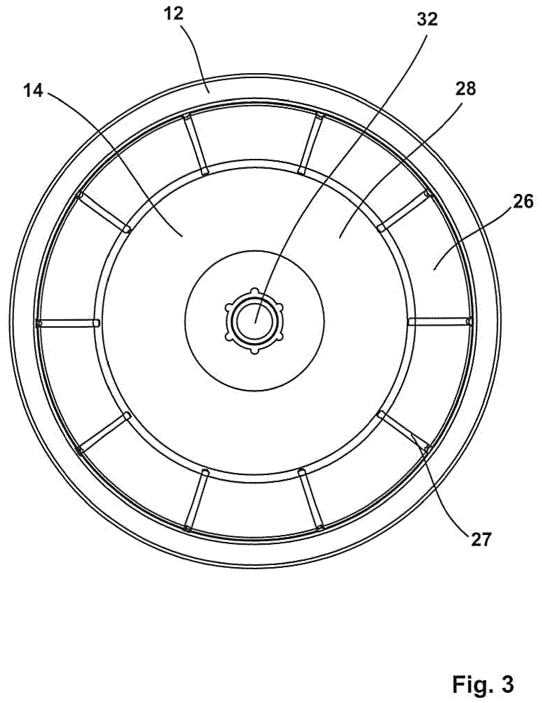

Gegenstand der Erfindung ist nunmehr die Ausbildung des Deckels 10, wie er sich insbesondere in Anschauung der Fig. 2 und 3 ergibt. Der Deckel 10 umfasst einen Deckelrand 12 und einen sich an den Deckelrand 12 anschließenden Deckelboden 14. Der Deckelrand 12 besitzt eine den Behälterbund 8 umgreifende Nase 16, wodurch der Deckel 12 im Bereich des Deckelrandes 12 mit dem Behälter 1 rastbar verbindbar ist. Der Deckelrand 12 weist darüber hinaus den mit 18 bezeichneten Einzug auf.

Durch den Einzug 18 wird bewirkt, dass der Deckelboden 14 von der Oberseite des Deckelrandes 12 in Richtung auf die Innenseite des Behälters 1 abgesetzt ist. Hierdurch wird erreicht, dass egal in welcher Stellung sich der Deckelboden 14 befindet, also in der in Fig. 2 dargestellten Ausgangsposition oder in einer Stellung, in der der Deckelboden oder Teile des Deckelbodens nach außen gewölbt sind, mehrere solcher Behälter im Wesentlichen immer stapelbar übereinander lagerbar sind.

Der Deckelboden 14 zeichnet sich im Einzelnen durch das Ringsegment 26 aus, wobei sich an das Ringsegment 26 der kreisförmige Abschnitt 28 anschließt. Das Ringsegment 26 selbst ist in Richtung der Mittellängsachse 30 und auf die Oberseite des Deckels 10 zu schräg verlaufend ausgerichtet, das heißt, das Ringsegment 26 weist im Querschnitt eine Schräge auf.

Der von dem Ringsegment 26 aufgenommene kreisförmige Abschnitt 28 besitzt eine in Richtung auf den Boden 6 des Behälters ausgerichtete Wölbung, wobei zentrisch in dem kreisförmigen Abschnitt 28 eine Öffnung 32 zur Aufnahme einer Rohrhülse (nicht dargestellt) vorgesehen ist. Die Öffnung 32 ist umgeben von einem Bund 34, wodurch eine gute Abdichtung der Öffnung 32 gegenüber der nicht dargestellten Rohrhülse erreicht wird. Um den Bund 34 herum ist der kreisförmige Abschnitt eben ausgebildet (Pfeil 29).

Der kreisförmige Abschnitt 28 ist so ausgebildet, dass im Bereich der Öffnung 32 der in der Draufsicht kreisförmige Abschnitt im Wesentlichen eben ausgebildet ist.

Das Ringsegment 26 weist, wie sich dies in Anschauung von Fig. 3 ergibt, umfangsverteilt mehrere längliche Nasen 27 auf, die der Versteifung des Ringsegments 26 dienen. Diese Nasen 27, die umfangsverteilt auf dem Ringsegment 26 angeordnet sind, erstrecken sich auch über die Höhe des Einzuges 18.

### Bezugszeichenliste:

- 1: Behälter
- 3: Behältersegment
- 4: Behältersegment
- 6: Boden
- 8: Behälterbund
- 10: Deckel
- 12: Deckelrand
- 14: Deckelboden
- 16: Nase
- 18: Einzug
- 26: Ringsegment
- 27: Nase
- 28: kreisförmiger Abschnitt
- 29: ebene Fläche
- 30: Mittellängsachse
- 32: Öffnung
- 34: Bund

## Patentansprüche

1. Behälter (1) für die Zubereitung und/oder den Transport einer Fleischeinheit für einen Drehspieß mit einem Boden (6) und einem den Behälter (1) verschließbaren Deckel (10), wobei der Deckel (10) einen Deckelrand (12) und einen Deckelboden (14) aufweist, dass der Deckelboden (14) mindestens einen kreisförmigen Abschnitt (28) aufweist, der im auf der Öffnung des Behälters aufsitzenden Zustand in axialer Richtung des Behälters (1) beweglich ist,
**dadurch gekennzeichnet,**
**dass** der mindestens eine kreisförmige Abschnitt (28) im auf dem Behälter (1) aufsitzenden Zustand aus einer ersten, auf den Innenraum des Behälters (1) zugerichteten Lage in mindestens eine zweite Lage überführbar ist, in der der Abstand zum Boden (6) des Behälters größer ist als bei der ersten Lage, wobei der Deckelboden (14) ein sich an den Deckelrand (12) anschließendes Ringsegment (26) aufweist, das den kreisförmigen Abschnitt (28) aufnimmt, wobei das Ringsegment (26), das den kreisförmigen Abschnitt (28) aufweist, im Übergangsbereich zu dem kreisförmigen Abschnitt (28) in axialer Richtung des Behälters (1) beweglich ist, wobei der Deckelboden (14) eine zentrische Öffnung (32) zur Aufnahme einer Rohrhülse aufweist.

2. Behälter (1) nach Anspruch 1,
**dadurch gekennzeichnet,**
**dass** das Ringsegment (26) in Richtung der Mittellängsachse (30) des Behälters (1) auf die Oberseite des Deckels (10) zu schrägverlaufend ausgerichtet ist.

3. Behälter (1) nach einem der voranstehenden Ansprüche,
**dadurch gekennzeichnet,**
**dass** der kreisförmige Abschnitt (28) in auf dem Behälter (1) aufsitzenden Zustand eine in Richtung des Bodens (6) des Behälters ausgerichtete Wölbung aufweist.

4. Behälter (1) nach einem der voranstehenden Ansprüche,
**dadurch gekennzeichnet,**
**dass** das Ringsegment (26) umfangsverteilt sich über die Breite des Ringsegmentes erstreckende Nasen (27) aufweist.

5. Behälter (1) nach Anspruch 4,
**dadurch gekennzeichnet,**
**dass** der Deckelrand (12) einen Einzug (18) aufweist, wobei sich an den Einzug (18) das Ringsegment (26) anschließt, wobei die Nasen (27) des Ringsegments sich über die Höhe des Einzugs (18) erstrecken.

6. Behälter (1) nach einem der voranstehenden Ansprüche,
**dadurch gekennzeichnet,**
**dass** die Öffnung (32) einen Bund (34) aufweist.

7. Behälter (1) nach einem der voranstehenden Ansprüche,
**dadurch gekennzeichnet,**
**dass** der Deckel (10) aus Kunststoff, z. B. Polypropylen, hergestellt ist.

8. Verwendung eines Behälters (1) für die Zubereitung und/oder den Transport einer Fleischeinheit für einen Drehspieß, mit einem Boden (6) und einem den Behälter (1) verschließbaren Deckel (10), wobei der Deckel einen Deckelrand (12) und einen Deckelboden (14) aufweist, wobei der Deckelboden (14) mindestens einen kreisförmigen Abschnitt (28) aufweist, der im auf der Öffnung des Behälters aufsitzenden Zustand in axialer Richtung des Behälters (1) beweglich ist, wobei der mindestens eine kreisförmige Abschnitt (28) im auf dem Behälter (1) aufsitzenden Zustand aus einer ersten, auf den Innenraum des Behälters (1) zugerichteten Lage in mindestens eine zweite Lage überführbar ist, in der der Abstand zum Boden (6) des Behälters größer ist als bei der ersten Lage, wobei der Deckelboden (14) ein sich an den Deckelrand (12) anschließendes Ringsegment (26) aufweist, das den kreisförmigen Abschnitt (28) aufnimmt, wobei das Ringsegment (26), das den kreisförmigen Abschnitt (28) aufweist, im Übergangsbereich zu dem kreisförmigen Abschnitt (28) in axialer Richtung des Behälters (1) beweglich ist, wobei der Deckelboden (14) eine zentrische Öffnung (32) zur Aufnahme einer Rohrhülse aufweist.

9. Verwendung eines Behälters (1) nach Anspruch 8,
**dadurch gekennzeichnet,**
**dass** der Behälter (1) nach einem oder mehreren der Ansprüche 2 bis 7 ausgebildet ist.

## Claims

1. A container (1) for preparation and/or transport of a meat unit for a rotating spit with a bottom (6) and a cover (10) closing the container (1), the cover (10) comprising a cover edge (12) and a cover bottom (14), the cover bottom (14) comprising at least a circular portion (28) which is movable in axial direction of the container (1) in the condition resting on the opening of the container,
**characterised in**
**that** the at least one circular portion (28) in the condition resting on the container (1) from a first position oriented towards the interior of the container (1) can be transferred into at least a second position in which the distance to the bottom (6) of the container is greater than in the first position, the cover bottom (14) comprising a ring segment (26) connecting to the cover edge (12), which receives the circular portion (28), the ring segment (26) comprising the circular portion (28) being movable in the transition area to the circular portion (28) in axial direction of the container (1), the cover bottom (14) comprising a central opening (32) for receiving a tube sleeve.

2. The container (1) according to claim 1,
**characterised in**
**that** the ring segment (26) in the direction of the central longitudinal axis (30) of the container (1) is oriented obliquely towards the upper side of the cover (10).

3. The container (1) according to any one of the preceding claims,
**characterised in**
**that** the circular portion (28) in the condition resting on the container (1) comprises a curvature oriented towards the direction of the bottom (6) of the container.

4. The container (1) according to any one of the preceding claims,
**characterised in**
**that** the ring segment (26) comprises lugs (27) extended across the width of the ring segment in circumferential distribution.

5. The container (1) according to claim 4,
**characterised in**
**that** the cover edge (12) comprises a retraction (18), the ring segment (26) connecting to the retraction (18), the lugs (27) of the ring segment extending across the height of the retraction (18).

6. The container (1) according to any one of the preceding claims,
**characterised in**
**that** the opening (32) comprises a collar (34).

7. The container (1) according to any one of the preceding claims,
**characterised in**
**that** the cover (10) is made of plastic, for example, polypropylene.

8. Use of a container (1) for preparation and/or transport of a meat unit for a rotating spit with a bottom (6) and a cover (10) closing the container (1), the cover (10) comprising a cover edge (12) and a cover bottom (14), the cover bottom (14) comprising at least a circular portion (28) which is movable in axial direction of the container (1) in the condition resting on the opening of the container, that the at least one circular portion (28) in the condition resting on the container (1) from a first position oriented towards the interior of the container (1) can be transferred into at least a second position in which the distance to the bottom (6) of the container is greater than in the first position, the cover bottom (14) comprising a ring segment (26) connecting to the cover edge (12), which receives the circular portion (28), the ring segment (26) comprising the circular portion (28) being movable in the transition area to the circular portion (28) in axial direction of the container (1), the cover bottom (14) comprising a central opening (32) for receiving a tube sleeve.

9. Use of a container (1) according to claim 8,
**characterised in**
**that** the container (1) is formed according to any one or several of claims 2 to 7.

## Revendications

1. Récipient (1) pour la préparation et/ou le transport d'une unité de viande pour un tournebroche avec un fond (6) et un couvercle (10) fermant le récipient (1), le couvercle (10) comportant un bord de couvercle (12) et un fond de couvercle (14), le fond de couvercle (14) comportant au moins une partie circulaire (28) qui est mobile dans la direction axiale du récipient (1) dans l'état reposant sur l'ouverture du récipient (1)
**caractérisé en ce**
**que** l'au moins une partie circulaire (28) dans l'état reposant sur le récipient (1) peut être transférée d'une première position orientée vers l'intérieur du récipient (1) à au moins une seconde position dans laquelle la distance au fond (6) du récipient (1) est plus grande que pour la première position, le fond de couvercle (14) comportant un segment annulaire se raccordant au bord de couvercle (12) recevant la partie circulaire (28), le segment annulaire (26) comportant la partie circulaire (28) dans la zone de transition à la partie circulaire (28) étant mobile en direction axiale du récipient (1), le fond de couvercle (14) comportant une ouverture centrale (32) pour recevoir une gaine tubulaire.

2. Récipient (1) selon la revendication 1,
**caractérisé en ce**
le segment annulaire (26) dans la direction de l'axe longitudinal central (30) du récipient (1) est orienté à l'oblique vers le côté supérieur du couvercle (10).

3. Récipient (1) selon l'une quelconque des revendications précédentes,
**caractérisé en ce**
**que** la partie circulaire (28) dans l'état reposant sur le récipient (1) comporte une courbure orientée vers le fond (6).

4. Récipient (1) selon l'une quelconque des revendications précédentes,
**caractérisé en ce**
**que** le segment annulaire (26) comporte des ergots (27) s'étendant sur la largeur du segment annulaire autour de la périphérie.

5. Récipient (1) selon la revendication 4,
**caractérisé en ce**
**que** le bord de couvercle (12) comporte un retrait (18), le segment annulaire (26) se raccordant au retrait (18), les ergots (27) du segment annulaire s'étendant sur la hauteur du retrait (18).

6. Récipient (1) selon l'une quelconque des revendications précédentes,
**caractérisé en ce**
**que** l'ouverture (32) comporte une collerette (34).

7. Récipient (1) selon l'une quelconque des revendications précédentes,
**caractérisé en ce**
**que** le couvercle (10) est réalisée en matière plastique, par exemple en polypropylène.

8. Utilisation d'un récipient (1) pour la préparation et/ou le transport d'une unité de viande pour un tournebroche avec un fond (6) et un couvercle (10) fermant le récipient (1), le couvercle (10) comportant un bord de couvercle (12) et un fond de couvercle (14), le fond de couvercle (14) comportant au moins une partie circulaire (28) qui est mobile dans la direction axiale du récipient (1) dans l'état reposant sur l'ouverture du récipient (1), l'au moins une partie circulaire (28) dans l'état reposant sur le récipient (1) pouvant être transférée d'une première position orientée vers l'intérieur du récipient (1) à au moins une seconde position dans laquelle la distance au fond (6) du récipient (1) est plus grande que pour la première position, le fond de couvercle (14) comportant un segment annulaire (26) se raccordant au bord de couvercle (12) recevant la partie circulaire (28), le segment annulaire (26) comportant la partie circulaire (28) dans la zone de transition à la partie circulaire (28) étant mobile en direction axiale du récipient (1), le fond de couvercle (14) comportant une ouverture centrale (32) pour recevoir une gaine tubulaire.

9. Utilisation d'un récipient (1) selon la revendication 8,
**caractérisé en ce**
**que** le récipient (1) est formé selon l'une ou plusieurs des revendications 2 à 7.
